# EUROPEAN PATENT SPECIFICATION

(11) **EP 4 045 221 B1**
(45) Date of publication and mention of the grant of the patent: **11.12.2024**
(21) Application number: 20817212.2
(22) Date of filing: 12.10.2020
(51) Int. Cl.: B23K 11/11, B23K 11/30, B23K 31/12

(54) **A METHOD FOR DETERMINING A LEVEL OF WEAR OF WELDING ELECTRODE CAPS FOR RESISTANCE SPOT WELDING AND A DEVICE FOR PERFORMING THIS METHOD**
VERFAHREN ZUR BESTIMMUNG DES VERSCHLEISSGRADES VON SCHWEISSELEKTRODENKAPPEN ZUM WIDERSTANDSPUNKTSCHWEISSEN UND VORRICHTUNG ZUR DURCHFÜHRUNG DIESES VERFAHRENS
PROCÉDÉ DE DÉTERMINATION D'UN NIVEAU D'USURE DE CAPUCHONS D'ÉLECTRODES DE SOUDAGE POUR SOUDAGE PAR POINTS PAR RÉSISTANCE ET DISPOSITIF POUR LA MISE EN OEUVRE DE CE PROCÉDÉ

(30) Priority: 18.10.2019 CZ 20190648
(43) Date of publication of application: 24.08.2022
(73) Proprietor: Ceske vysoke uceni technicke v Praze, 160 00 Praha 6 - Dejvice (CZ); Workswell S.R.O., 16100 Praha 6 (CZ)
(72) Inventor: SOVA, Jan, 28401 Kutná Hora (CZ); HOFREITER, Milan, 16000 Praha 6 (CZ); KOLARÍK, Ladislav, 28102 Cerhenice (CZ); FOREJTOVÁ, Lucie, 16000 Praha 6 (CZ); KOVÁR , Jan, 74101 Nový Ji ín (CZ); KOLARÍKOVÁ, Marie, 28102 Cerhenice (CZ)
(74) Representative: Novotny, Karel
(86) International application number: PCT/CZ2020/000046
(87) International publication number: WO 2021/073665

(56) References cited:
- CZ-U1- 33 128
- DE-A1- 19 854 956
- JP-A- 2010 017 748
- JP-A- H01 215 475
- US-A1- 2008 237 199

## Description

### Technical Field of the Invention

The invention concerns a method for determining a level of wear of metal caps for resistance spot welding electrodes (see, e.g., DE 198 54 956 A1). The principle is based on determining a change in effective emissivity on a surface of welding electrodes, or more precisely replaceable welding caps, as a result of their wear.

### State-of-the-art

At present machining, typically milling, or a replacement of replaceable welding caps of electrodes takes place preventively in resistance spot welding during manufacturing processes, i.e. solely on the basis of realized welding cycles, and/or welded joints. This procedure, as usual in preventive approaches, does not reflect the real wear of a welding electrode cap surface, in particular with regard to a fact that the wear may occur considerably unevenly owing to the welding process accidentality, sometimes even as a result of a single markedly failed weld. A fixed, i.e. preventively specified, period of a replacement or machining of an electrode surface can never be set-out completely optimally, resulting in an unnecessary often replacement, or, on the contrary, defective welds may be made as a result of using considerably worn-out welding electrode caps.

### Subject Matter of the invention

The above mentioned imperfections can be removed to a large extent by a method of determining a level of wear of welding electrode caps for resistance spot welding according to this invention. Its subject matter is a measurement of the thermal emission intensity on a surface of replaceable welding caps and the level of their wear can be determined based on the increased emissivity of a welding cap surface.

Preferably the thermal emissivity intensity measurement is carried out immediately after performing a weld, by direct measuring or indirect measuring using an infrared reflector.

During laboratory measurements it was observed that the electrode wear caused a step increase in emissivity on a surface of welding electrode replaceable caps for spot resistance welding. The non-worn cap surface emissivity is very low, i.e. close to zero, because it is standardly made of copper alloys with a smooth surface. During welding, after a contact of a cap with a surface of welded parts, i.e. with a basic material, the emissivity step increase occurs. Then, along with an increasing wear the contact area with a significantly higher emissivity further extends across the whole cap surface. Thus the electrical resistance changes markedly, which influences the welding parameters set-up, and/or the quality of welded joints.

The method according to the invention is contactless and can be used whenever during the resistance welding process, but also out of the process, however, then it is necessary to ensure a sufficient heating of the welding electrode cap - for instance using an external thermal source.

For indirect measurements an infrared reflector with emissivity as close to zero as possible is used. So a procedure according to ČSN ISO 18434-1 for determining a reflected apparent temperature on the measured surface is used. Using this infrared reflector the thermal emission from a surface of a welding electrode replaceable cap is reflected to the thermal camera objective. The infrared reflector is used where the welding electrode cap surface cannot be scanned directly due to a system configuration, e.g. a lack of space, an improper measurement angle etc.

The proposed solution brings-in a predictive and pro-active approach, where welding electrode replaceable caps can be replaced or milled effectively as a result of an actual condition and a wear level, not only on the basis of a number of welds performed. The method according to the invention and the described device, which can be used to perform the method, meet requirements of CSN ISO 17359 technical standard "Condition monitoring and diagnostics of machines - General guidelines", whereas a preventive approach is replaced by a modern, predictive one.

For performing the method according to the invention both LWIR (Long Wave InfraRed), i.e. thermal cameras working within wavelengths from 7 to 14 µm, and MWIR (Medium Wave InfraRed), i.e. thermal cameras working within wavelengths approximately from 3 to 5 µm, can be used; that means thermal cameras with a sufficient image frequency so that a moment after carrying out a weld is captured when the apparent surface temperature of an electrode, or an electrode cap, is still high enough.

The method according to the invention and the device can be used particularly for determining the wear of welding electrode caps even during the manufacturing process, i.e. without a need of any manufacturing process shut-down or a need to take-out or replace the electrode during the process. The device, which does not form part of the invention, can be implemented to the welding process and the determination of the wear level of welding electrode caps can be performed using the device completely automatically without any affect or intervention to the manufacturing process.

The use of the device can help to reduce time and financial costs for replacement or milling of the surface of welding electrode caps, but also, above all, welds carried out improperly due to using welding electrodes worn-out ahead of schedule can be prevented.

### Overview of Drawings

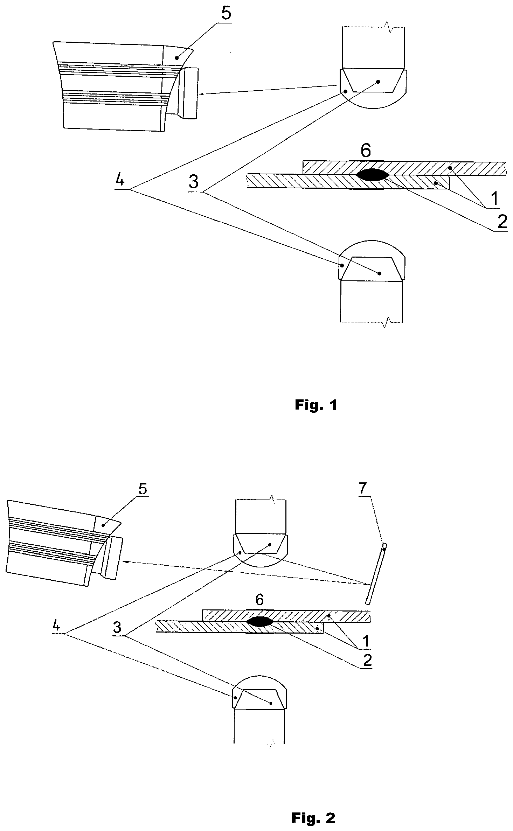

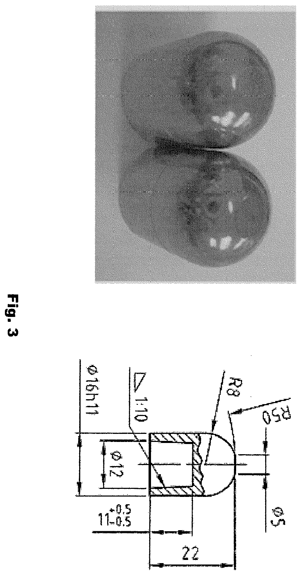

The attached drawings show a detailed description of particular examples of embodiments of the device, which can be used for the method according to the invention, where Fig. 1 shows a schematic depiction of the device, where a direct method is applied and the surface temperature of a welding electrode cap is determined through the direct measurement using a thermal camera. Fig. 2 shows a schematic depiction of the device, where an indirect method is applied and the surface temperature of a welding electrode cap is determined indirectly using a thermal camera that determines a reflected apparent temperature on the infrared reflector surface. Fig. 3 shows the used welding electrodes including physical dimensions.

### Example of the Embodiment of the Invention

When using the proposed method for determining the welding electrode caps wear in resistance spot welding the thermal emission intensity is measured on the surface of welding electrode replaceable caps 4 located on attachments 3 and the level of their wear is determined on the basis of the increased emissivity on the surface of welding caps 4. The measurement of the thermal emission intensity is carried out immediately after the weld has been performed.

In one case the measurement of the thermal emission intensity is carried out through the direct measurement.

In another case the measurement of the thermal emission intensity is carried out through the indirect measurement using infrared reflector 7.

The above mentioned method is performed using a device containing thermal camera 5 for scanning the thermal emission from a surface of welding electrode replaceable cap 4 connected to a computational device.

Or, possibly, a device containing thermal camera 5 for scanning the thermal emission from a surface of welding electrode replaceable cap 4 by means of an infrared reflector 7 connected to a computational device.

The aim of the invention is achieved by a direct or indirect measurement, i.e. using infrared reflector 7 of the thermal emission, i.e. the apparent temperature of welding electrode replaceable caps 4, using thermal camera 5, and that always immediately after performing a weld when the surface temperature of replaceable welding cap 4 is still high enough for the emissivity change to be shown effectively as a measurable difference of a value of the apparent temperature reflected from particular parts of the surface of cap 4. This thermal emission intensity determined through thermal camera 5 particularly results from a change in the effective surface emissivity of caps 4 during their wearing. The surface emissivity change shows itself also in a reflectivity change, and thus also an influence of the reflected thermal emission from surface 6 of weld lens 2 at welded parts 1.

For an example of the method for determining a wear level of welding electrode replaceable caps 4 for resistance spot welding, the following devices and equipment were used:
Workswell stationary LWIR thermal camera WIC 640 with 640x512 px resolution, 30 Hz frame rate, 50 mK temperature sensitivity and 13 mm lenses was used as thermal camera 5. Dalex PMS 11-4 resistance welding machine with SER Mega 2 MF control unit was used for creating welded joints.

39D 1978-2 welding electrode caps 4 made of CuCr1Zr (group A according to EN ISO 5182) with a diameter of the electrode contact surface of 5 mm and a total diameter of 16 mm were used for experimental welding.

### Industrial Usability

The device according to the invention can be used for the predictive and proactive diagnostics, i.e. determining a wear level of welding electrode replaceable caps according to requirements based on CSN ISO 17359 technical standard. It is usable instead of the nowadays preventive approach, when welding electrode replaceable caps are either replaced or milled only on the basis of a number of performed welds or on the basis of defectively performed welded joints.

## Claims

1. A method for determining a level of wear of welding electrode caps in resistance spot welding, ***characterized in that*** the thermal emission intensity from a surface of welding electrode replaceable caps (4) is measured and the wear level is determined on the basis of the increased emissivity on the surface of welding caps (4).

2. A method according to Claim 1, ***characterized in that*** the measurement of the thermal emission intensity is carried out immediately after a weld has been performed.

3. A method according to Claim 1 or 2, ***characterized in that*** the measurement of the thermal emission intensity is carried out by the direct measurement.

4. A method according to Claim 1 or 2, ***characterized in that*** the measurement of the thermal emission intensity is carried out by the indirect measurement using infrared reflector (7).

## Patentansprüche

1. Verfahren zur Ermittlung eines Verschleißgrades von Schweißelektrodenkappen beim Widerstandspunktschweißen, ***dadurch gekennzeichnet, dass*** die thermische Emissionsintensität von einer Oberfläche von Schweißelektroden-Wechselkappen (4) gemessen und der Verschleißgrad anhand der erhöhten Emissivität an der Oberfläche der Schweißkappen (4) ermittelt wird.

2. Verfahren nach Anspruch 1, ***dadurch gekennzeichnet, dass*** die Messung der Wärmeemissionsintensität unmittelbar nach Durchführung einer Schweißung erfolgt.

3. Verfahren nach Anspruch 1 oder 2, ***dadurch gekennzeichnet, dass*** die Messung der thermischen Emissionsintensität durch Direktmessung erfolgt.

4. Verfahren nach Anspruch 1 oder 2, ***dadurch gekennzeichnet, dass*** die Messung der thermischen Emissionsintensität durch indirekte Messung mittels Infrarotreflektor (7) erfolgt.

## Revendications

1. Procédé pour déterminer un niveau d'usure de capuchons d'électrodes de soudage lors d'un soudage par points par résistance, ***caractérisé en ce que*** l'intensité d'émission thermique provenant d'une surface de capuchons remplaçables d'électrodes de soudage (4) est mesurée et le niveau d'usure est déterminé sur la base de l'émissivité accrue. à la surface des capuchons de soudure (4).

2. Procédé selon la revendication 1, ***caractérisé en ce que*** la mesure de l'intensité de l'émission thermique est effectuée immédiatement après la réalisation d'une soudure.

3. Procédé selon la revendication 1 ou 2, ***caractérisé en ce que*** la mesure de l'intensité de l'émission thermique est effectuée par mesure directe.

4. Procédé selon la revendication 1 ou 2, ***caractérisé en ce que*** la mesure de l'intensité de l'émission thermique est effectuée par mesure indirecte à l'aide d'un réflecteur infrarouge (7).
